(19) Europäisches Patentamt / European Patent Office / Office européen des brevets

(11) **EP 4 491 308 A1**

(12) **EUROPEAN PATENT APPLICATION**

(43) Date of publication:
**15.01.2025 Bulletin 2025/03**

(21) Application number: **23184906.8**

(22) Date of filing: **12.07.2023**

(51) International Patent Classification (IPC):
**B23B 27/16** *(2006.01)* **B23B 27/10** *(2006.01)*

(52) Cooperative Patent Classification (CPC):
**B23B 27/1677;** B23B 27/10; B23B 2205/02;
B23B 2205/08; B23B 2205/16; B23B 2260/096;
B23B 2260/106; B23B 2260/136

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **WALTER AG**
**72072 Tübingen (DE)**

(72) Inventor: **WÜTZ, Michael**
**72072 Tübingen (DE)**

(74) Representative: **Sandvik**
**Sandvik Intellectual Property AB**
**811 81 Sandviken (SE)**

(54) **A METAL CUTTING TOOL HOLDER**

(57) A metal cutting tool holder (1) for use with a cutting insert (12), said tool holder (1) comprising a tool holder body (2), having a pocket (3) for receiving the cutting insert (12), a clamp (4), which is adapted to engage the cutting insert (12), when the cutting insert is received in the pocket (3), and is releasably mounted to the tool holder body (2), a rod device (5) connecting the clamp (4) to the tool holder body (2), the clamp (4) being movable from a first clamp position, in which the clamp (4) is disengaged from the cutting insert (12), to a second clamp position, in which said clamp (4) engages the cutting insert (12) for securing the cutting insert (12) in the pocket (3) of the tool holder body (2). The tool holder (1) comprises a rotatable member (6), which is connected to the rod device (5) to be rotatable around a rotational axis (R) from a first rotational position to a second rotational position, the rotatable member (6) comprising a first engagement portion (7) which is arranged to engage a second engagement portion (8) of the tool holder (1), the rotatable member (6) forming a first distance (D1) between the rotational axis (R) and a first contact point (CP1) of the first engagement portion (7) and forming a second distance (D2) between the rotational axis (R) and a second contact point (CP2) of the first engagement portion (7), said second distance (D2) being larger than said first distance (D1), the first contact point (CP1) being arranged to engage the second engagement portion (8) in the first rotational position and the second contact point (CP2) being arranged to engage the second engagement portion (8) in the second rotational position, such that a rotation of the rotatable member (6) from the first rotational position to the second rotational position causes the clamp (4) to move into said second clamp position.

Fig 4

## Description

TECHNICAL FIELD OF THE INVENTION

The present invention relates broadly the technical field of metal cutting. Specifically, the present invention is related to the field of metal cutting tool holders used for metal cutting operations in machines such as computer numerical control, i.e. CNC, machines. More specifically, the present invention relates to a metal cutting tool holder for use with a cutting insert, said tool holder comprising a tool holder body, having a pocket for receiving the cutting insert, a clamp, which is adapted to engage the cutting insert, when the cutting insert is received in the pocket, and is releasably mounted to the tool holder body, a rod device connecting the clamp to the tool holder body, the clamp being movable from a first clamp position, in which the clamp is disengaged from the cutting insert, to a second clamp position, in which said clamp engages the cutting insert for securing the cutting insert in the pocket of the tool holder body.

BACKGROUND OF THE INVENTION AND PRIOR ART

In order to secure a cutting insert in the pocket of a metal cutting tool holder, which comprises a clamp, various attempts have been made to configure suitable cutting insert mounting arrangements. To enable replacement and/or indexing of the cutting insert, the clamp needs to be disengaged from the cutting insert. Further, in order to use the metal cutting tool holder together with the cutting insert for metal cutting operations, the cutting insert has to be properly secured in the pocket by the clamp.

One type of metal cutting tool holder is disclosed in EP2719487B1, having a nut and bolt arrangement for connecting the clamp to the tool holder and securing a cutting insert in the pocket of the tool holder. In such an arrangement, to install or index a cutting insert, the nut and bolt must be sufficiently loosened relative to each other to enable moving the clamp and permitting the cutting insert to be inserted under the clamp. Until the nut and bolt are tightened sufficiently, the cutting insert may fall out of the pocket of the tool holder. Moreover, this can be complicated even more if the insert will have to be installed in an inconvenient location, making it necessary to hold the cutting insert in place with one hand while the nut and bolt are tightened. Further, in order to operate such a solution, so as to sufficiently tighten the nut and bolt arrangement, normally additional means, such as a screwdriver, an allen key, a wrench or similar is required.

SUMMARY OF THE INVENTION

An object of the present invention is to provide a metal cutting tool holder having improved cutting insert mounting characteristics. A further object is to provide a metal cutting tool holder enabling change of cutting insert without the use of auxiliary means, such as special tools, for example a screwdriver or a wrench. A still further object is to provide a metal cutting tool holder, having more reliable cutting insert mounting properties. A still further object is to provide a metal cutting tool holder holder enabling quick removal and replacement of cutting inserts.

At least the main object is achieved with the initially defined metal cutting tool holder, which is characterized in that the tool holder comprises a rotatable member, which is connected to the rod device to be rotatable around a rotational axis from a first rotational position to a second rotational position, the rotatable member comprising a first engagement portion which is arranged to engage a second engagement portion of the tool holder, the rotatable member forming a first distance between the rotational axis and a first contact point of the first engagement portion and forming a second distance between the rotational axis and a second contact point of the first engagement portion, said second distance being larger than said first distance, the first contact point being arranged to engage the second engagement portion in the first rotational position and the second contact point being arranged to engage the second engagement portion in the second rotational position, such that a rotation of the rotatable member from the first rotational position to the second rotational position causes the clamp to move into said second clamp position.

The rotatable member enables a simple and reliable actuation of the clamp between its two positions, by simply rotating the rotatable member. Further, the operation of the rotatable member does not require the use of any additional tools, such as screwdrivers, allen keys, wrenchs or similar. Rather, rotating the rotatable member by hand is sufficient. In addition, by way of the rotatable member being connected to the rod device, and the quick and simple operation provided by the rotatable member, this tool holder minimizes the risk of the cutting insert falling out of the pocket of the tool holder.

According to an embodiment of the invention the rotatable member has an eccentric configuration. This allows for advantageous arrangement of the rotatable member to form a first distance between the rotational axis and a first contact point of the first engagement portion and forming a second distance between the rotational axis and a second contact point of the first engagement portion.

According to an embodiment of the invention the rotatable member further comprises a lever. This improves the rotation of the rotatable member by hand. For example, gripping the lever is more convenient for the user. Also, the lever enables a greater force to be applied to the rotatable member, which further simplifies the use of the tool holder.

According to an embodiment of the invention the lever comprises a coolant channel. This allows for advantageous production of the tool holder, since no extra components of the tool holder needs to be produced in order to provide desired coolant distribution.

According to an embodiment of the invention the rotatable member comprises a peripheral cam portion. This allows for advantageous arrangement of the rotatable member to form a first distance between the rotational axis and a first contact point of the first engagement portion and forming a second distance between the rotational axis and a second contact point of the first engagement portion.

According to an embodiment of the invention the rotatable member is rotatable a limited rotation amount between two rotation end points. This allows for a pre-determined rotation of the rotatable member so as to avoid incorrect, i.e. too tight or too loose, clamping of the cutting insert in the pocket. Also, the rotatable member being rotatable a limited rotation amount enables quicker operation of the tool holder for removing and replacing a cutting insert.

According to an embodiment of the invention said rotation amount is no more than 120°, preferably no more than 100°. The inventor has found that this allows for a sufficiently quick removal and replacement of cutting insert.

According to an embodiment of the invention the second engagement portion is located on the tool holder body. This allows for freedom of designing the engagement second portion so as to achieve an advantageous co-operation with the first engagement portion.

According to an embodiment of the invention the rod device is arranged to actuate the clamp. This ensures an advantageous actuation of the clamp.

According to an embodiment of the invention the rotational axis is substantially perpendicular to a longitudinal axis of the rod device. This ensures an advantageous rotation of the rotational member.

According to an embodiment of the invention the metal cutting tool holder comprises a resilient member acting on the clamp. One advantage is that such a configuration can help with disassembling the tool holder. Further, this can allow for adjusting the clamping force to be applied to the cutting insert. Further, it can help to compensate for tolerances in production of the metal cutting tool holder.

According to an embodiment of the invention said resilient member is a spring. This allows for simple and economical production of the resilient member.

According to an embodiment of the invention said resilient member is arranged between a head portion of the tool holder body and a bottom surface of the clamp. This allows for simple placement of the resilient member when assembling the tool holder.

According to an embodiment of the invention said resilient member is provided by said rod device having elastic properties. This is advantageous in that a separate resilient member can be omitted.

According to an embodiment of the invention the first engagement portion is arranged to slide against the second engagement portion upon rotation of the rotatable member from the first rotational position to the second rotational position. This allows for a smooth and easy operation of the tool hoder.

According to an embodiment of the invention the rotatable member forms a third distance between the rotational axis and a third contact point of the first engagement portion, said third distance being larger than said second distance, the third contact point being arranged to engage the second engagement portion in a third rotational position, being located between the first rotational position and the second the second rotational position, such that a rotation of the rotatable member from the first rotational position, passing the third rotational position, to the second rotational position causes the clamp to move into and to be secured in said second clamp position. The provision of a third distance, being larger than the second distance, is the provision of a dead point position for the cutting insert clamping arrangement, including the rod device, the rotatable member and the clamp. By passing the third rotational position during rotation of the rotatable member from the first rotational position to the second rotational position, the dead point position for the cutting insert clamping arrangement is passed. Thus, the rotation of the rotatable member not only causes the clamp to move into the second clamp position, but also to be safely secured in said second clamp position.

DESCRIPTION OF THE DRAWINGS

The present invention will now be explained in more detail by a description of different embodiments of the invention and by reference to the accompanying drawings.

Fig. 1 is a front perspective view of a metal cutting tool holder according to a first embodiment.

Fig. 2 is an exploded side view of the metal cutting tool holder in Fig. 1,

Fig. 3 is a top view of a front head portion of the metal cutting tool holder in Fig. 1,

Fig. 4 is a cross-section of the metal cutting tool holder in Fig. 1, showing the rotatable member in a first rotational position,

Fig. 5 is a cross-section of the metal cutting tool holder in Fig. 1, showing the rotatable member in another rotational position,

Fig. 6 is a cross-section of the metal cutting tool holder in Fig. 1, showing the rotatable member in yet another rotational position,

Fig. 7 is a bottom view of a front head portion of the metal cutting tool holder in Fig. 1,

Fig. 8 is a side view of the rotatable member of the metal cutting tool holder according to the first embodiment,

Fig. 9 is a top view of the rotatable member of the metal cutting tool holder according to the first embodiment,

Fig. 10 is a cross-section similar to Fig. 4 of a metal cutting tool holder according to a second embodiment.

## DETAILED DESCRIPTION OF EMBODIMENTS OF THE INVENTION

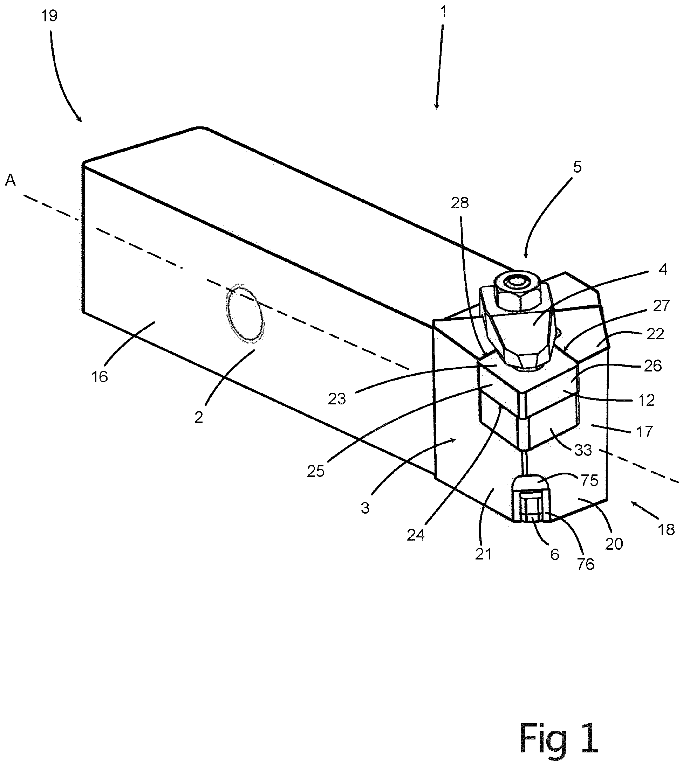

Reference is made to Figs. 1-9 illustrating a first embodiment of a metal cutting tool holder 1. Fig. 1 is a front perspective view of the metal cutting tool holder 1, which is a turning tool holder, comprising a tool holder body 2 made from one piece of a metal alloy. According to the first embodiment, the metal alloy is steel. The tool holder body 2 has a generally elongate shape with a central axis A defining a longitudinal direction. The metal cutting tool holder 1 has a forward end 18 and a rear end 19. Further, the tool holder body 2 comprises a rear shank portion 16, having a generally rectangular cross-section, and a forward head portion 17, which has a larger width and a larger thickness than the shank portion 16. The tool holder body 2 is adapted, at its rear end 19, to be coupled directly or indirectly, i.e. by a further extension body, to a machine tool such as a machine spindle of a CNC-machine (not shown).

The metal cutting tool holder 1 comprises a pocket 3 for receiving a cutting insert 12, which in the illustrated embodiment is a turning insert. The cutting insert 12 is made from a harder material than the tool holder body 2, such as cemented carbide. The illustrated cutting insert 12 has a parallelogram shape in a top view thereof and comprises a flat top surface 23 and a flat bottom surface 24 parallel with said top surface 23. The cutting insert 12 further comprises four side surfaces 25, 26, 27, 28, extending perpendicularly towards said top and bottom surfaces 23, 24, and a central hole 29 extending between and opening into the top and bottom surfaces 23, 24. Cutting edges are formed at the intersection between the side surfaces 25, 26, 27, 28 and the top surface 23. In another embodiment, cutting edges are also formed at the intersection between the side surfaces 25, 26, 27, 28 and the bottom surface 24.

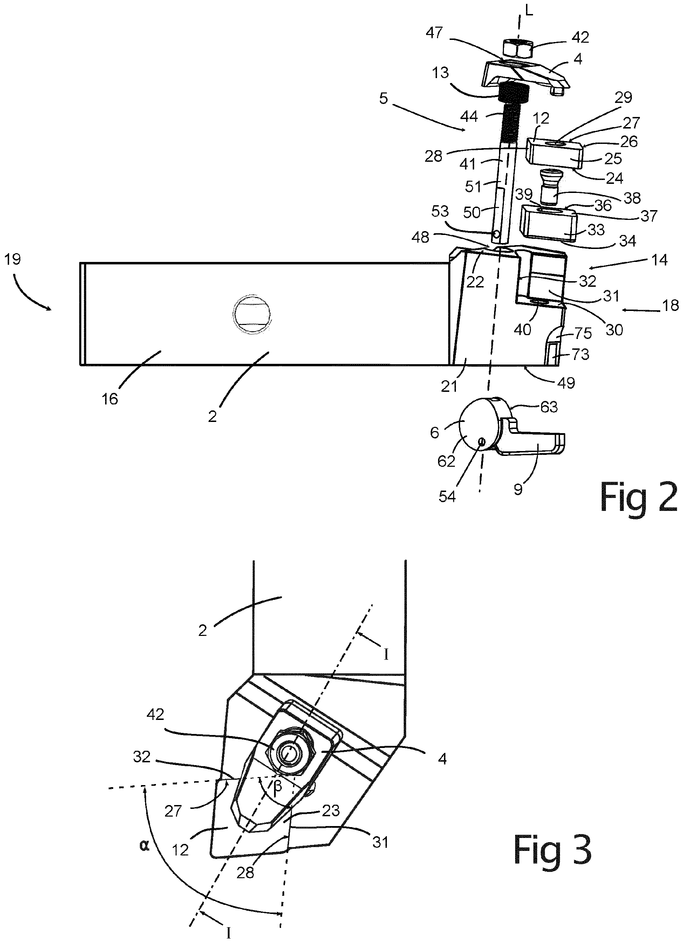

The pocket 3 is formed by a recess 14 in the head portion 17 of the tool holder body 2, which recess intersects a forward end surface 20, a side surface 21 as well as an upper surface 22 of the head portion 17. As illustrated in Fig. 2, the pocket 3 comprises a flat bottom support surface 30 being slightly inclined to, but extending generally in the direction of the central axis A. The pocket 3 further comprises two upstanding support surfaces 31, 32, both being flat and oriented substantially perpendicular to the bottom support surface 30. As seen in top view in Fig. 3, the two upstanding support surfaces 31, 32 of the pocket 3 form an angle α generally corresponding to the angle β formed by two adjacent side surfaces 27, 28 of the cutting insert 12. In the illustrated embodiment these angles α and β are 80°. When the cutting insert 12 is received in the pocket 3, two adjacent side surfaces 27, 28 of the cutting insert 12 come into surface abutment against said upstanding support surfaces 31, 32 of the pocket 3. Furthermore, as seen in Figs. 1-2, the tool holder body comprises a recessed portion 75, which intersects a forward end surface 20, a side surface 21 as well as bottom surface 49 of the head portion 17. The recessed portion 75 does not extend all the way up to the recess 14 for receiving the cutting insert 12. An elongated groove 73 is arranged in the bottom surface 49 of the tool holder head portion 17 and exits in said recessed portion 75.

In the embodiment illustrated in Figs. 1-9, the metal cutting tool holder is suitable for use together with a shim 33, which has a shape generally corresponding to the shape of the cutting insert. Preferably, the shim 33 is made from a material being softer than the material of the cutting insert 12. According to this embodiment, the shim 33 is made of steel. According to an alternative embodiment, the shim 33 is made of cemented carbide. When the shim 33 is received in the pocket 3, a flat bottom surface 34 of the shim 33 rests against the flat bottom support surface 30 of the pocket, while two flat side surfaces 35, 36 of the shim 33 come into surface abutment against the two upstanding support surfaces 31, 32 of the pocket 3. The shim 33 is secured in the pocket by a clamping screw 38, which extends through a central hole 39 of the shim and engages a thread in a mounting hole 40 in the bottom support surface 30. Thus, when the cutting insert 12 is received in the pocket 3, the cutting insert bottom surface 24 rests against a flat top surface 37 of the shim 33.

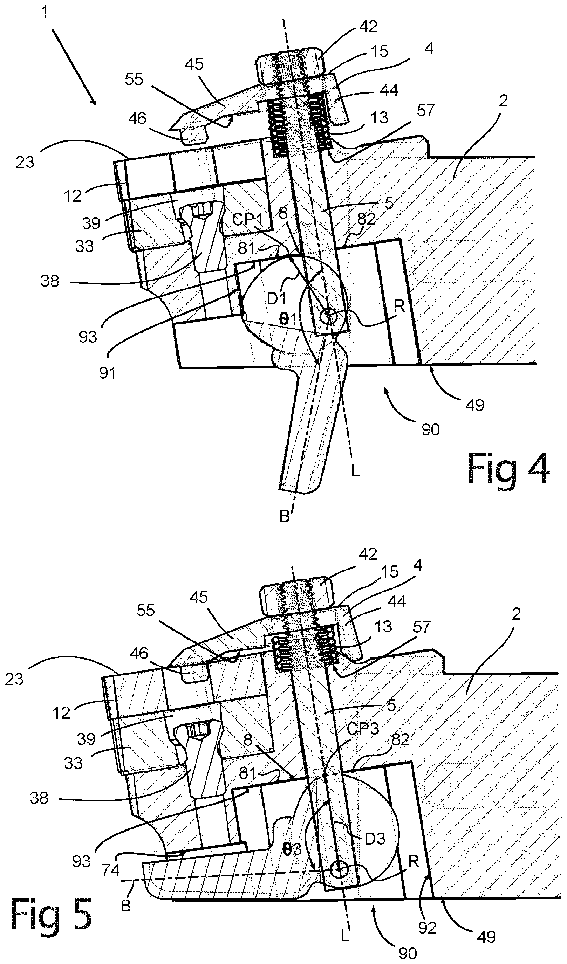

The metal cutting tool holder 1 further comprises a clamp 4, which is adapted to engage the cutting insert 12, when the cutting insert is received in the pocket 3. As best seen in Figs. 4-6, the clamp has an L-shape in cross-section, i.e. comprising a shorter leg 44 at an angle, for example in the region of 90°, with a longer leg 45. The clamp 4 comprises a protrusion 46, being located in the front part of said longer leg 45 and having a cylinder-like shape protruding from a bottom surface 55 of the longer leg 45. The clamp 4 is releasably mounted to the tool holder body 2. More specifically, a rod device 5 connects the clamp 4 to the tool holder body 2. The rod device 5 has a generally elongate configuration and comprises a rod portion 41, having a generally cylindrical shape, and a head portion 42. A center axis L defines a longitudinal direction of the rod device 5. In the embodiment illustrated in Figs. 1-9, the head portion 42 of the rod device 5 is a nut, which is connected to the rod portion 41 via an inner thread of the nut 42 engaging an outer thread 44 provided at an upper part of the rod portion 41. The rod portion 41 further comprises an intermediate part 51 having a cylindrical envelope surface, which is arranged below said upper threaded part 44 and adjoining a recessed part 50 at the bottom of the rod portion 41. In an alternative embodiment the head portion 42 is integrated with, i.e. non-releasably connected to, the rod portion 41.

When connecting the clamp 4 to the tool holder body 2, the rod portion 41 extends through a through hole 47 in the clamp and into a through hole 48 in the tool holder body 2. The tool holder body through hole 48 runs from the upper surface 22 of the tool holder body head portion 17 to a recess 90 formed in bottom surface 49 of the tool holder body head portion 17.

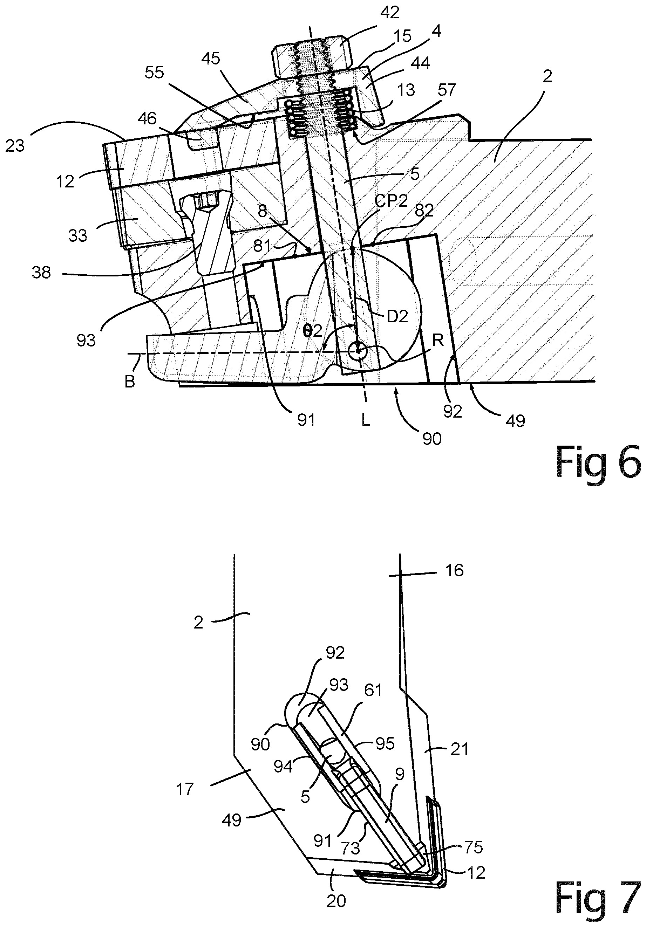

As can be seen in Fig. 7, the recess 90 has generally oval, elongate shape in a bottom view thereof and extending substantially in the direction of the tool holder body head portion 17. As seen in Fig. 7, the head portion 17 extends at an angle, being 45° in the present embodiment, in relation to the rear shank portion 16 of the tool holder body 2. In other words, the recess 90 and the head portion 17 points downwards to the right in Fig. 7. The recess 90 intersects or opens into the bottom surface 49 of the head portion 17 and is delimited by a semi-circular front wall 91, a semi-circular rear wall 92, two flat and parallel side walls 94, 95 as well as a top support surface 93. Further, as seen in Fig. 7, the groove 73 runs between the front wall 91 of recess 90 and to the recessed portion 75.

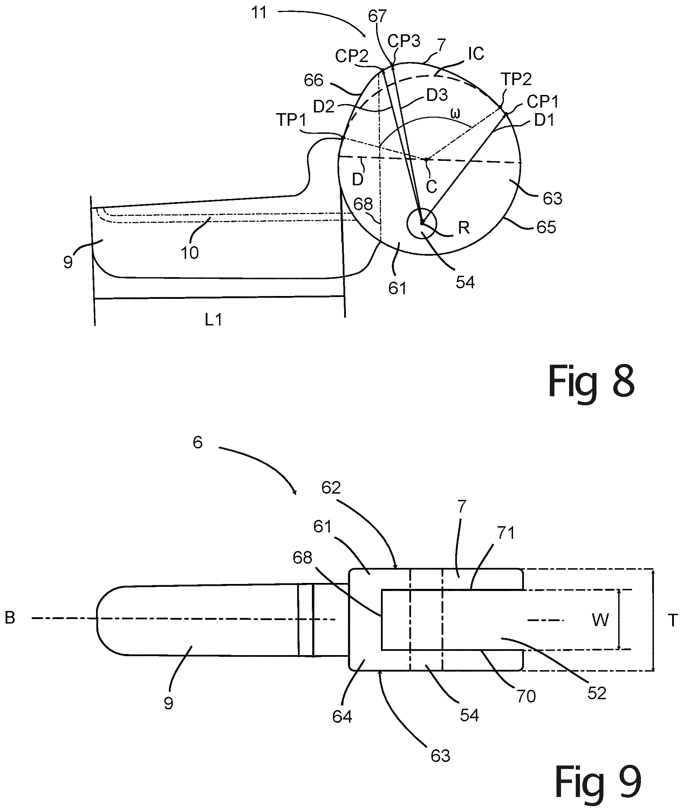

The metal cutting tool holder 1 further comprises a rotatable member 6, which is connected to the rod device 5. The rotatable member 6 is illustrated in side view in Fig. 8, from which is apparent that the rotatable member 6 comprises a main part 61 having a generally round configuration in side view and a lever 9 extending from said main part 61. As seen in Fig. 2, the main part 61 of the rotatable member 6 has the shape of a solid truncated non-circular cylinder, having two parallel side surfaces 62, 63 and a curved envelope surface 64 extending therebetween. In other words, the main part 61 has a disc-like or drum-like shape with a thickness T. The lever 9, in the general shape of an elongate arm, protrudes from the envelope surface 64 and extends along a longitudinal axis B of the lever 9. The width of the lever 9 is smaller than the thickness T of the main part 61.

As can be seen in Fig. 8, the shape of the two identical side surfaces 62, 63 is generally round, but non-circular. The periphery of each of the side surfaces 62, 63 is defined by a circle segment 65 and a non-circular, more specifically elliptic, segment 66. Also shown in Fig. 8 by way of a dashed line is an inscribed circle IC, having center point C and diameter D. While not being the true center of mass, functionally, the center point C can still be considered the center point C of reference for the main part 61 of the rotatable member 6. The circle segment 65 connects to, or transitions into, the elliptic segment 66 at first transition point TP1, to the left in Fig. 8, and a second transition point TP2, to the right in Fig. 8. As illustrated in Fig. 8, the circle segment 65 lies on the inscribed circle IC, whereas the elliptic segment 66 deviates from the inscribed circle IC, the deviation starting at said transition points TP1, TP2. The portion of the main part 61, which protrudes radially outwardly from the strict circular shape of the inscribed circle IC, i.e. the portion defined by the elliptic segment 66 between transition points TP1, TP2, constitutes a peripheral cam portion 11 of the rotatable member 6. The apex 67 of the cam portion 11 is the highest point or the point on the elliptic segment 66 located at the largest radial distance from the center point C. Further, as illustrated in Fig. 8, the length L1 of the lever 9 is longer than the diameter D of the inscribed circle IC. In this embodiment the lever length L1 is 1.5 times the diameter D, i.e. as expressed by the following equation

$$L1 = 1.5 * D$$

Following the configuration of the two side surfaces 62, 63, the envelope surface 64 has a circle cylindric surface segment adjoining circle segments 65 of the peripheries of side surfaces 62, 63 and an elliptic surface segment adjoining elliptic segments 66 of the peripheries of side surfaces 62, 63. In the illustrated embodiment the circle segment 65 is substantially longer than the elliptic segment 66. Thus, the angle $\omega$ enclosed between the first transition point TP1 and the second transition point TP2, i.e. the angle $\omega$ enclosed by the elliptic segment 66, is 120°. Accordingly, an angle of 360°- $\omega$ = 240° is enclosed by the circle segment 65. Further, the lever 9 comprises a coolant channel 10, which is adapted to be connected to a coolant distribution channel (not shown) in the tool body 2.

The rotatable member 6 is connected to the rod device 5 via a slot 52 in the rotatable member 6. The slot 52, which is a through slot, intersects the envelope surface 64 and is adapted to receive the recessed bottom part 50 of the rod portion 41 of the rod device 5.

As seen in Figs. 8-9, the slot 52 is delimited by a front surface 68 and two side surfaces 70, 71. The slot side surfaces 70, 71 are parallel with each other and parallel with the two parallel side surfaces 62, 63 of the main part 61. The distance between the slot side surfaces 70, 71 defines the width W of the slot 52. The slot width W is smaller than the thickness T of the main part 61. The slot front surface 68 limits the rotation of the rotatable member 6. Further, a pin 53 is arranged at the bottom end of the recessed bottom part 50 of the rod portion 41. Upon inserting the recessed bottom part 50 of the rod portion 41 into the slot 52 of the rotatable member 6, the pin 53 is inserted in a recess 54 of the rotatable member 6 adapted to receive said pin 53. In the illustrated embodiment said recess 54 is a cylindrical through hole in the main part 61 running between and opening into the side surfaces 62, 63 thereof. Thus, the through hole 54 also intersects the slot 52, as seen in Fig. 8. Accordingly, the rotatable member 6 is rotatable around a rotational axis R defined by said through hole 54. Also, since the pin 53 is received in the through hole 54, the rotatable member 6 is rotatable around a rotational axis R as defined by the pin 53. In other words, the rotatable member 6 is pivotably connected to the rod device 5. The rotational axis R, as provided by the pin 53, is oriented substantially perpendicular to the center axis L of the rod device 5. As seen in Fig. 8, the through hole 54 is not located at the center point C, but rather off-center, i.e at a distance from said center point C. Thus, the rotatable member 6 has an eccentric configuration.

The metal cutting tool holder 1 further comprises a resilient member 13 in the form of a spring, which is arranged between the head portion 17 of the tool holder body 2 and a bottom surface 55 of the clamp, more specifically the longer leg 45 thereof. The spring is received in an aperture 56 in the head portion 17 of the tool holder body 2. The aperture 56 opens into the upper surface 22 of the head portion 42. The spring 13 abuts against a circular bottom support surface 57 of said aperture 56 and has a length, such that the spring protrudes above upper surface 22 of the head portion 42, thereby allowing the spring 13 to act on the clamp 4. Further, the aperture 56 is concentric with the tool holder through hole 48. The diameter of the aperture 56 is larger than the diameter of the tool holder through hole 48. Accordingly, the aperture 56 can be viewed as a wider top part of the tool holder through hole 48.

Turning now to Figs. 4-6, which show a cross-section along the line I-I in Fig. 3 and illustrate the rotatable member 6 in different rotational positions. Fig. 4 shows the metal cutting tool holder 1 in a first, open position allowing for exchange or indexing of the cutting insert 12. The clamp 4 is shown in a first clamp position, which is a non-clamping position, in which the clamp is not actively pressing against the cutting insert. Thus, the clamp 4 is disengaged from the cutting insert 12. This is also evident from Fig. 4 in that there is a visible gap between the bottom surface 55 of the longer leg 45 of the clamp and the top surface 23 of the cutting insert 12. Also, there is a visible gap between the clamp protrusion 46 and the top surface 23 of the cutting insert 12. Furthermore, the bottom surface 55 of the longer leg 45 is in contact with the spring 13. Fig. 4 shows the rotatable member 6 in a first rotational position, in which the lever 9, as defined by its longitudinal axis B, forms a first angle $\theta 1$ = 160° with the center axis L of the rod device 5. In other words, the lever 9 points generally downwards and slightly towards the left. In this position the lever 9 is positioned such that the slot rear surface 69 is in contact with the rod portion 41, which limits the rotatable member 6 from any further rotation in the counter-clockwise direction, thereby defining a first rotation end point. The rotatable member 6 comprises a first engagement portion 7, in the form of a part of the envelope surface 64, which is arranged to engage a second engagement portion 8, in the form of a part of the support surface 93 of the recess 90 of the tool holder body 2. The second engagement portion 8 extends from a forward end 81, located in front of the rod device 5, i.e. to the left of the rod device 5, to a rear end 82, which is located rearwardly of the rod device 5, i.e. to the right of the rod device 5. In other words, the forward end 81 of the second engagement portion 8 is closer to the front wall 91 of recess 90, whereas the rear end 82 of the second engagement portion 8 is closer to the rear wall 92 of recess 90.

Thanks to the configuration of the rotatable member 6, which in the embodiment illustrated in Figs. 1-9 has an eccentric configuration and comprises a radially protruding peripheral cam portion 11, the rotatable member 6 forms a first distance D1 between the rotational axis R and a first contact point CP1 of the first engagement portion 7. Also, the rotatable member 6 forms a second distance D2 between the rotational axis R and a second contact point CP2 of the first engagement portion 7. Additionally, the rotatable member 6 forms a third distance D3 between the rotational axis R and a third contact point CP3 of the first engagement portion 7. The second distance D2 is larger than the first distance D1. The third distance D3 is larger than the second distance D2. As best seen in Fig. 8, the first contact point CP1 is located on the circle cylindric surface segment of envelope surface 64, which adjoins the circle segment 65. Thus, the first contact point CP1 is positioned generally opposite the lever 9 and near the second transition point TP2. The second contact point CP2 is located on the elliptic surface segment of envelope surface 64, which adjoins the elliptic segment 66. Accordingly, the second contact point CP2 is positioned closer to the lever 9 and closer to the first transition point TP1, than what the first contact point is. In other words, the second contact point CP2 is located to the left in Fig. 8 and to the left of both the centre point C and the recess 54, whereas the first contact point CP1 is located to the right in Fig. 8 and to the right of both the centre point C and the recess 54. The third contact point CP3 is located on the elliptic surface segment of envelope surface 64, which adjoins the elliptic segment 66. However, the third contact point CP3 is located between the first contact point CP1 and the second contact point CP2. More specifically, the third contact point CP3 is located at the apex 67 of the peripheral cam portion 11. Thanks to the third contact point CP3 being located at the apex 67 of the peripheral cam portion 11, the distance D3 between the rotational axis R and the third contact point CP3 is also the maximum distance between the rotational axis R and any point on the of the first engagement portion 7 or any point on the envelope surface 64.

The rotatable member 6 is rotatable around the rotational axis R from the first rotational position, as illustrated in Fig. 4, to a second rotational position, as illustrated in Fig. 6. During the rotation from the first rotational position to the second rotational position, a third rotational position of the rotatable member 6, as illustrated in Fig. 5, is passed.

As shown in Fig. 4, when the rotatable member 6 is positioned in the first rotational position, the first contact point CP1 engages the second engagement portion 8. More specifically, the envelope surface 64 of the main part 61 is in surface contact with the support surface 93 of the recess 90 of the tool holder body 2 at a position close to the forward end 81 of the second engagement portion 8, i.e. to the left of the rod device 5.

While the rotatable member 6 is positioned in the first rotational position, the rod device 5 is in a first translational position, in which the head portion 42 of the rod device 5 is in direct surface contact with the top surface 15 of the clamp. At the same time, the spring 13 is in a relaxed state.

Upon clockwise rotation of the rotatable member 6 around the rotational axis R from the first rotational position, as illustrated in Fig. 4, the first engagement portion 7 slides against the second engagement portion 8. More specifically, the envelope surface 64 of the main part 61 remains in surface contact with and slides against the support surface 93 of the recess 90. By way of rotation of the rotatable member 6, and since the rod device 5 is not movable in a direction perpendicular to its longitudinal direction L when received in the through hole 48, the point of contact between the first engagement portion 7 and the second engagement portion 8 moves closer to the rear wall 92 of recess 90, i.e. towards the right in Figs. 4-6. At the same time, the distance between the rotational axis R and the point of contact between the first engagement portion 7 and the second engagement portion 8 increases. In this way the rotational movement of the rotatable member 6 is transferred into a translational movement of the rod device 5, generally downwards in Figs. 4-6. Thus, the rod device 5 is movable inside the through hole 48 of the tool holder body and travels in the longitudinal direction L of the rod device 5, which is also the longitudinal direction of the through hole 48. Accordingly, the rod device 5 actuates the clamp 4, in that the head portion 42 of the rod device 5 is pressed against the clamp top surface 15 and urges the clamp generally downwards, i.e. towards the tool body 2 and towards the cutting insert 12. This clamp actuation by the rod device 5 also causes the bottom surface 55 of the clamp longer leg 45 to press against the top of the spring 13 and compress the spring. Further, the clamp protrusion 46 engages the insert central hole 29 during the same clamp actuation. Also, a part of the bottom surface 55 of the clamp longer leg 45 close to the protrusion 46 contacts the cutting insert top surface 23. As a result of the clamp actuation by rotation of the rotatable member 6, the cutting insert bottom surface 24 is pressed against the shim top surface 37 and the two adjacent side surfaces 27, 28 of the cutting insert 12 are pressed against the upstanding support surfaces 31, 32 of the pocket 3.

Following a rotation of the rotatable member 6 around the rotational axis R from the first rotational position, as illustrated in Fig. 4 and as described above, the rotatable member 6 will first reach the third rotational position, as illustrated in Fig. 5. The metal cutting tool holder 1 is in Fig. 5 shown in a third, intermediate position, in which the cutting insert 12 is secured in the pocket 3. The clamp 4 is shown in a third clamp position, in which the clamp is actively pressing against the cutting insert 12 and against the spring 13. Thus, the clamp 4 engages the cutting insert 12. Fig. 5 shows the rotatable member 6 in a third rotational position, in which the lever 9, as defined by its longitudinal axis B, forms a third angle $\theta 3 = 85°$ with the center axis L of the rod device 5. In other words, the lever 9 points generally towards the left. In this position the lever 9 is positioned at a distance from, i.e. not contacting, a bottom surface 74 of the groove 73. When the rotatable member 6 is positioned in the third rotational position, the third contact point CP3 engages the second engagement portion 8. More specifically, the envelope surface 64 of the main part 61 is in surface contact with the support surface 93 of the recess 90 of the tool holder body 2 at a position being closer to the rear end 82 of the second engagement portion 8 than the point of contact between the first and second engagement portions 7, 8 shown in Fig. 4. The third contact point CP3 engages the second engagement portion 8 substantially in line with the rod device 5. While the rotatable member 6 is positioned in the third rotational position, the rod device 5 is in an intermediate translational position, in which the head portion 42 of the rod device 5 is still in direct surface contact with the top surface 15 of the clamp. At the same time, the spring 13 is in a compressed state, i.e. acting on the clamp 4 so as to push it generally upwards. In its intermediate translational position the rod device 5 is in a lower position in relation to its first translational position in Fig. 4. This is evident from the bottom of the rod portion 41 being positioned at a larger distance from the support surface 93 of the recess 90 than what is shown in Fig. 4. Since the distance D3 between the rotational axis R and the third contact point CP3 is also the maximum distance between the rotational axis R and any point on the first engagement portion 7, the intermediate translational position the rod device 5 is also the lowest translational position of the rod device 5. Consequently, the spring 13 is in its most compressed state, as shown in Fig. 5. Accordingly, in this positon shown in Fig. 5, the complete system of movable parts, including at least the cutting insert 12, the clamp 4, the rod device 5, the spring 13 and the rotational member 6, is in an unstable equilibrium state. In other words, the provision of a third distance D3, being larger than the second distance D2, is the provision of a dead point position for the cutting insert clamping arrangement, including the rod device 5, the rotatable member 6 and the clamp 4.

A further rotation of the rotatable member 6 around the rotational axis R from the third rotational position, as illustrated in Fig. 5 and as described above, will bring the rotatable member 6 into the second rotational position, as illustrated in Fig. 6. The metal cutting tool holder 1 is in Fig. 6 shown in a second, closed position, in which the cutting insert 12 is safely secured, or locked in place, in the pocket 3. The clamp 4 is shown in a second clamp position, in which the clamp is actively pressing against the cutting insert 12 and against the spring 13. Thus, the clamp 4 still engages the cutting insert 12. Fig. 6 shows the rotatable member 6 in a second rotational position, in which the lever 9, as defined by its longitudinal axis B, forms a second angle $\theta 2 = 80°$ with the center axis L of the rod device 5. In other words, the lever 9 points generally towards the left and slightly upwards. In this position the lever 9 is positioned in contact with the bottom surface 74 of the groove 73, which stops the rotatable member 6 from any further rotation in the clockwise direction, thereby defining a second rotation end point. In this position, the front end of the lever 9 protrudes in front of the front surface 76 of the recessed portion, such that coolant may be distributed towards the cutting insert 12 during metal cutting operations.

Thus, the rotatable member is rotatable a limited rotation amount θ between two rotation end points, i.e. between the first rotation end point as illustrated in Fig. 4 and the second rotation end point as illustrated in Fig. 6. Accordingly, the limited rotation amount θ is the angular difference between said two rotation end points. According to one embodiment said rotation amount θ is no more than 120°, preferably no more than 100°. In the illustrated embodiment said rotation amount is calculated as

$$\theta = \theta 1 - \theta 2 = 160° - 80° = 80°$$

When the rotatable member 6 is positioned in the second rotational position, the third contact point CP2 engages the second engagement portion 8. More specifically, the envelope surface 64 of the main part 61 is in surface contact with the support surface 93 of the recess 90 of the tool holder body 2 at a position being closer to the rear end 82 of the second engagement portion 8 than the point of contact between the first and second engagement portions 7, 8 shown in Fig. 4 and in Fig. 5. The second contact point CP2 engages the second engagement portion 8 slightly to the right of the center axis L of the rod device 5. While the rotatable member 6 is positioned in the second rotational position, the rod device 5 is in a second translational position, in which the head portion 42 of the rod device 5 is still in direct surface contact with the top surface 15 of the clamp. At the same time, the spring 13 is in a compressed state, i.e. acting on the clamp 4 so as to push it generally upwards. However, the spring 13 is somewhat less compressed in relation to the compressed state shown in Fig. 5. In its second translational position the rod device 5 is in a lower position in relation to its first translational position in Fig. 4, but in a slightly higher translational position as compared with the intermediate position in Fig. 5. Accordingly, in this positon shown in Fig. 6, the complete system of movable parts, including at least the cutting insert 12, the clamp 4, the rod device 5, the spring 13 and the rotational member 6, is in a stable equilibrium state. By having passed the third rotational position during rotation of the rotatable member from the first rotational position to the second rotational position, the dead point position for the cutting insert clamping arrangement, including the rod device, the rotatable member and the clamp, has been passed. Thus, the rotation of the rotatable member not only causes the clamp to move into the second clamp position, but also to be safely secured in said second clamp position. The resilient properties of the resilient member 13, i.e. the spring in this embodiment, may be configured according to user requirements, so as to achieve a desired a stable equilibrium state for the movable parts.

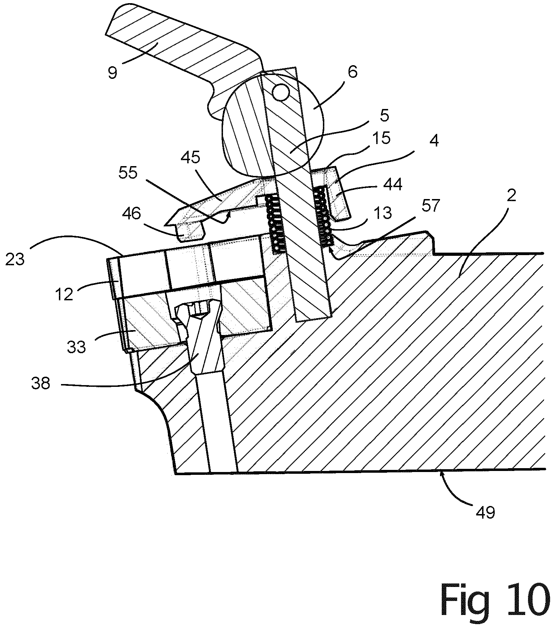

In Fig. 10 a second embodiment of a metal cutting tool holder 1 is illustrated. Same reference numerals designate the same features, as for the embodiment described above with reference to Fig. 1-9. The metal cutting tool holder 1 in Fig. 10 differs from the embodiment in Figs. 1-9 mainly in the arrangement of the rotatable member 6. More specifically, the rotatable member 6 is arranged above and in contact with the clamp 4. Moreover, the rod device 5 lacks any head portion and is not moveable when received in hole 48 in the tool body 2. For example, the rod device 5 may be firmly or rigidly connected, for example via press fit or glue, to the tool body 2 when received in hole 48, which is not a through hole. Upon counter-clockwise rotation of the rotatable member 6 around the rotational axis R from its first rotational position, as illustrated in Fig. 10, the first engagement portion 7 of the rotatable member 6 slides against the second engagement portion 8, which in this embodiment is located on the top surface 15 of the clamp 4. More specifically, the envelope surface 64 of the main part 61 remains in surface contact with and slides against the top surface 15 of the clamp 4. By way of rotation of the rotatable member 6, and since the rod device 5 is not movable in any direction when received in and rigidly connected to the hole 48, the point of contact between the first engagement portion 7 and the second engagement portion 8 moves towards the right in Fig. 10. At the same time, the distance between the rotational axis R and the point of contact between the first engagement portion 7 and the second engagement portion 8 increases. In this way the rotational movement of the rotatable member 6 is transferred into a translational and/or pivotal movement of the clamp, generally downwards in Fig. 10. Thus, the rotatable member 6 directly actuates the clamp 4, in that the envelope surface 64 of the main part 61 is pressed against the clamp top surface 15 and urges the clamp generally downwards, i.e. towards the tool body 2 and towards the cutting insert 12. This clamp actuation by the rotatable member also causes the bottom surface 55 of the clamp longer leg 45 to press the top of the spring 13 and compress the spring. Further, the clamp protrusion 46 engages the insert central hole 29 during the same clamp actuation. Also, a part of the bottom surface 55 of the clamp longer leg 45 close to the protrusion 46 contacts the cutting insert top surface 23. As a result of the clamp actuation by rotation of the rotatable member 6, the cutting insert bottom surface 23 is pressed against the shim top surface 37 and the two adjacent side surfaces 27, 28 of the cutting insert 12 are pressed against the upstanding support surfaces 31, 32 of the pocket 3.

The dimensions of the different parts of any of the metal cutting tool holders described above can be configured based on user requirements. For example, the diameter D of the rotatable member inscribed circle may be 5 mm or larger, but normally not larger than 15 mm. Examples of lengths L1 of the lever include lengths from 7.5 mm to 22.5 mm.

The invention is not limited to the embodiments disclosed, but may be varied and modified within the scope of the following claims.

For example, while the metal cutting tool holder according to the embodiments and as described above is a turning tool holder, other embodiments include metal cutting tool holders for other metal cutting operations, such as milling and boring operations.

Further, while the metal cutting tool holder according to the embodiments and as described above is used together with a cutting insert having parallelogram shape in a top view thereof, of course the metal cutting tool holder is equally suitable for use with many other types of inserts, including for example cutting inserts having circular or triangular shape and cutting inserts lacking central hole.

For example, other embodiments include other configurations of the rod device, including a two-part configuration of the rod portion thereof.

Further, many other non-circular configurations of the peripheral cam portion, other than having strictly elliptic shape, are conceivable. Accordingly, another embodiment comprises a peripheral cam portion

For example, in the embodiments illustrated in Figs. 1-10 the main part 61 of the rotatable member and the lever 9 are made from one piece of a metal alloy, more specifically steel. According to an alternative embodiment the lever 9 is made from a different material than the main part 61. According to a further alternative embodiment, the lever is releasably connected to the main part 61, for example via a threaded pin of the lever 9 being engaged with a inner thread of a receiving aperture in the main part 61. According to yet another embodiment the rotatable member completely lacks any kind of lever. For such an embodiment, the main part of the rotatable member may be actuated directly by hand.

The rotatable member 6 according to the embodiments illustrated in Figs. 1-10 is configured having both a peripheral cam portion and eccentric configuration. According to an alternative embodiment the rotatable member has only eccentric configuration. According to yet an alternative embodiment the rotatable member has only a peripheral cam portion. According to a further embodiment the rotatable member is rotatable around a rotational axis R defined by a through hole being arranged at the center point of the main part. In such an embodiment, a peripheral cam portion is also included in order to achieve the desired translational movement of the rod device.

Although the resilient member described above in the embodiments illustrated in Figs. 1-10 is a spring, other suitable forms of resilient structures, such as a compressible rubber block, leaf springs, elastic discs and more are possible. Also, according to a further embodiment said resilient member 13 is arranged between a head portion 42 of the rod device 5 and a top surface 15 of the clamp 4. According to yet another embodiment said resilient member is provided by said rod device 5 having elastic properties.

For example, while in the embodiments illustrated in Figs. 1-9 a conventional pin 53 is arranged at the bottom end of the recessed bottom part 50 of the rod portion 41, other alternatives are conceivable. Thus, according to a further embodiment, a spring-loaded pin 53 is arranged at the bottom end of the recessed bottom part 50 of the rod portion 41. Upon inserting the recessed bottom part 50 of the rod portion 41 into the slot 52 of the rotatable member 6, the spring-loaded pin 53 will snap into engagement with the recess 54 of the rotatable member 6 adapted to receive said pin 53.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such. Terms such as "upper", "lower", "top", "bottom", "forward" and "rear" refer to features as shown in the current drawings and as perceived by the skilled person.

## Claims

1. A metal cutting tool holder (1) for use with a cutting insert (12), said tool holder (1) comprising a tool holder body (2), having a pocket (3) for receiving the cutting insert (12), a clamp (4), which is adapted to engage the cutting insert (12), when the cutting insert is received in the pocket (3), and is releasably mounted to the tool holder body (2), a rod device (5) connecting the clamp (4) to the tool holder body (2), the clamp (4) being movable from a first clamp position, in which the clamp (4) is disengaged from the cutting insert (12), to a second clamp position, in which said clamp (4) engages the cutting insert (12) for securing the cutting insert (12) in the pocket (3) of the tool holder body (2), **characterized in that** the tool holder (1) comprises a rotatable member (6), which is connected to the rod device (5) to be rotatable around a rotational axis (R) from a first rotational position to a second rotational position, the rotatable member (6) comprising a first engagement portion (7) which is arranged to engage a second engagement portion (8) of the tool holder (1), the rotatable member (6) forming a first distance (D1) between the rotational axis (R) and a first contact point (CP1) of the first engagement portion (7) and forming a second distance (D2) between the rotational axis (R) and a second contact point (CP2) of the first engagement portion (7), said second distance (D2) being larger than said first distance (D1), the first contact point (CP1) being arranged to engage the second engagement portion (8) in the first rotational position and the second contact point (CP2) being arranged to engage the second engagement portion (8) in the second rotational position, such that a rotation of the rotatable member (6) from the first rotational position to the second rotational position causes the clamp (4) to move into said second clamp position.

2. A metal cutting tool holder (1) according to claim 1, **characterized in that** the rotatable member (6) has an eccentric configuration.

3. A metal cutting tool holder (1) according to claim 1 or 2, **characterized in that** the rotatable member (6) further comprises a lever (9).

4. A metal cutting tool holder according to claim 3, **characterized in that** the lever (9) comprises a coolant channel (10).

5. A metal cutting tool holder according to any of the preceding claims, **characterized in that** the rotatable member (6) comprises a peripheral cam portion (11).

6. A metal cutting tool holder according to any of the preceding claims, **characterized in that** the rotatable member (6) is rotatable a limited rotation amount ($\theta$) between two rotation end points.

7. A metal cutting tool holder according to claim 6, **characterized in that** said rotation amount ($\theta$) is no more than 120°, preferably no more than 100°.

8. A metal cutting tool holder according to any of the preceding claims, **characterized in that** the second engagement portion (8) is located on the tool holder body (2).

9. A metal cutting tool holder according to any of the preceding claims, **characterized in that** the rod device (5) is arranged to actuate the clamp (4).

10. A metal cutting tool holder according to any of the preceding claims, **characterized in that** the rotational axis (R) is substantially perpendicular to a longitudinal axis (L) of the rod device (5).

11. A metal cutting tool holder according to any of the preceding claims, **characterized in that** it comprises a resilient member (13) acting on the clamp (4).

12. A metal cutting tool holder according to claim 11, **characterized in that** said resilient member (13) is a spring.

13. A metal cutting tool holder according to claim 11 or 12, **characterized in that** said resilient member (13) is arranged between a head portion (17) of the tool holder body (2) and a bottom surface (55) of the clamp (4).

14. A metal cutting tool holder according to claim 11, **characterized in that** said resilient member (13) is provided by said rod device (5) having elastic properties.

15. A metal cutting tool holder according to any of the preceding claims **characterized in that** the first engagement portion (7) is arranged to slide against the second engagement portion (8) upon rotation of the rotatable member (6) from the first rotational position to the second rotational position.

16. A metal cutting tool holder according to any of the preceding claims **characterized in that** the rotatable member (6) forms a third distance (D3) between the rotational axis (R) and a third contact point (CP3) of the first engagement portion (7), said third distance (D3) being larger than said second distance (D2), the third contact point (CP3) being arranged to engage the second engagement portion (8) in a third rotational position, being located between the first rotational position and the second rotational position, such that a rotation of the rotatable member (6) from the first rotational position, passing the third rotational position, to the second rotational position causes the clamp (4) to move into and to be secured in said second clamp position.

Fig 1

Fig 2

Fig 3

Fig 4

Fig 5

Fig 6

Fig 7

Fig 8

Fig 9

Fig 10

Europäisches
Patentamt
European
Patent Office
Office européen
des brevets

# EUROPEAN SEARCH REPORT

**Application Number**

EP 23 18 4906

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 211 965 962 U (NORTH CHINA ELECTRIC POWER UNIV BAODING) 20 November 2020 (2020-11-20) * paragraph [0018]; figures 1, 3 * | 1-10,15, 16 | INV. B23B27/16 B23B27/10 |
| X | EP 3 031 556 A1 (DIAMETAL AG [CH]; OP DE HIPT MICHAEL [CH]) 15 June 2016 (2016-06-15) * paragraph [0059] - paragraph [0062]; figures 7,8 * | 1-16 | |
| A | EP 3 112 063 A1 (SECO TOOLS AB [SE]) 4 January 2017 (2017-01-04) * paragraph [0030] - paragraph [0035]; figures 2A-2 * | 1-16 | |
| A | EP 1 802 414 B1 (VAN HORSSEN CHARLES A [US]) 1 August 2012 (2012-08-01) * paragraph [0040] - paragraph [0042]; figures 13,14 * | 1-16 | |
| A | DE 20 2007 015220 U1 (SCHWEIZER DOROTHEA [DE]) 3 January 2008 (2008-01-03) * paragraph [0029] - paragraph [0030]; figures 4A,4B * | 1-16 | TECHNICAL FIELDS SEARCHED (IPC) B23B |

The present search report has been drawn up for all claims

| Place of search | Date of completion of the search | Examiner |
|---|---|---|
| The Hague | 14 January 2024 | Prelovac, Jovanka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 4906

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2024

| Patent document cited in search report | | Publication date | Patent family member(s) | | Publication date |
|---|---|---|---|---|---|
| CN 211965962 | U | 20-11-2020 | NONE | | |
| EP 3031556 | A1 | 15-06-2016 | DE 102015121392 | A1 | 09-06-2016 |
| | | | EP 3031556 | A1 | 15-06-2016 |
| EP 3112063 | A1 | 04-01-2017 | EP 3112063 | A1 | 04-01-2017 |
| | | | EP 3167985 | A1 | 17-05-2017 |
| EP 1802414 | B1 | 01-08-2012 | AU 2006254884 | A1 | 14-12-2006 |
| | | | BR PI0611957 | A2 | 13-10-2010 |
| | | | CA 2609422 | A1 | 14-12-2006 |
| | | | EP 1802414 | A2 | 04-07-2007 |
| | | | JP 5117380 | B2 | 16-01-2013 |
| | | | JP 2008543580 | A | 04-12-2008 |
| | | | KR 20080024120 | A | 17-03-2008 |
| | | | US 2006280566 | A1 | 14-12-2006 |
| | | | WO 2006133378 | A2 | 14-12-2006 |
| DE 202007015220 | U1 | 03-01-2008 | NONE | | |

EPO FORM P0459

For more details about this annex : see Official Journal of the European Patent Office, No. 12/82

**EP 4 491 308 A1**

**Patent documents cited in the description**

- EP 2719487 B1